# EUROPEAN PATENT APPLICATION

(11) **EP 4 749 123 A1**
(43) Date of publication of application: **27.05.2026**
(21) Application number: 24215467.2
(22) Date of filing: 26.11.2024
(51) Int. Cl.: F03D 17/00

(54) **METHOD FOR COMPENSATING A MISALIGNMENT OF AT LEAST ONE COMPONENT OF A WIND TURBINE**

(71) Applicant: Nordex Energy SE & Co. KG, 22419 Hamburg (DE)
(72) Inventor: Barz, Kay, 22419 Hamburg (DE)
(74) Representative: Epping - Hermann - Fischer

(57) **Abstract**

A method for compensating a misalignment of at least one component (1, 2) of a wind turbine (100) is specified, the method comprising
- providing first information (I1) which is representative of at least one image (P1, P2) taken with an image capturing device (5) and indicating an arrangement of a first component (1) of the wind turbine (100) relative to a second component (2) of the wind turbine (100),
- providing second information (I2) which is representative of at least one reference image (R1, R2) which corresponds to the at least one image (P1, P2),
- comparing the first information (I1) to the second information (I2) and, based on the comparison, determining whether a misalignment of the first component (1) relative to the second component (2, 3) exists, and,
- in case a misalignment is determined, executing a measure (M) to compensate the misalignment of the first component (1) relative to the second component (2).

## Description

A method for compensating a misalignment of at least one component of a wind turbine is specified. Furthermore, a computer program product, a computer-readable storage medium and a data processing device are specified. Moreover, an alignment system for a wind turbine and a wind turbine comprising the alignment system are specified.

A wind turbine usually comprises a rotor that has multiple rotor blades and that is positioned on a nacelle that is situated in an elevated position on a tower. The rotor blades transform wind energy into a drive torque that drives a generator of the wind turbine via a drive train for generating electrical energy.

In particular, wind turbines have multiple components that can rotate around a respective well-defined axis. Some typical examples are the rotor, the rotor blades, the nacelle and wind measuring devices. For instance, the rotor can rotate around the axis of the drive train, each of the rotor blades can rotate around a respective pitch axis, the nacelle can rotate in azimuthal direction around a vertical axis usually defined by the tower, and a wind measuring device like a wind direction sensor can rotate around an axis defined by a mounting pole with which the sensor is mounted on the nacelle. In order to properly monitor and/or adapt the respective degree of rotation, each of the rotational movements needs a reference position, for instance a 0°-reference, that is defined in regard to a predetermined condition. For example, the rotor can be defined to be at an angle of 0° if a certain predetermined rotor blade is in a certain condition like a 6 o'clock position, i.e. if the predetermined rotor blade is pointing downwards. A rotor blade pitch angle can for example be defined to be at an angle of 0° if it is aligned with a 0°-reference of the blade profile. Furthermore, the nacelle position can for instance be defined to be at an angle of 0° when the wind turbine is oriented towards the geographic north, and a wind direction sensor can for example be defined to be at an angle of 0° if a horizontal axis of the sensor is oriented parallel or antiparallel to the drive train.

In order to avoid unwanted losses, for example the rotor and rotor blades should be optimally oriented in regard to the currently prevailing wind conditions which can be monitored using one or more wind measuring devices like a wind direction sensor and/or a wind speed sensor. For instance, a misaligned wind direction sensor can lead to a static misalignment of the wind turbine, typically associated with a typical production loss between 0.5% and 1% (squared or cubed cosine of assumed maximum misalignment). Also, for example misaligned rotor blades can lead to an undesired loss in performance.

At least one object of certain embodiments is to provide a method for compensating a misalignment of at least one component of a wind turbine. Further embodiments can provide a computer program product comprising instructions which, when executed by a computer, cause the computer to carry out the method, a computer-readable storage medium, a data processing device, an alignment system for a wind turbine and a wind turbine.

These objects can be achieved by the method and the subject-matter according to the independent claims. Advantageous embodiments and developments are characterized in the dependent claims and are disclosed by the following description and the drawings.

According to at least one embodiment, a method for compensating a misalignment of at least one component of a wind turbine is specified. In the following, the method for compensating a misalignment of at least one component of a wind turbine can be referred to simply as method for compensating a misalignment or even as method in short. Here and in the following, an alignment can denote the arrangement of a component in relation to another component of the wind turbine or to an external reference point or object. A misalignment can exist if a component is arranged in an orientation and/or position relative to the other component, the reference point or object that deviates from a desired orientation and/or position. For example, in the method described herein the degree of misalignment can be determined for a component when the component is set to be in a certain intended arrangement like the reference position that can be a 0°-reference or in any other intended predetermined arrangement and the deviation of the real arrangement from the intended arrangement is determoined. Compensating a misalignment can include taking at least one measure for reducing the misalignment and/or for taking the misalignment into account during further operation of the wind turbine. In other words, the at least one measure can be configured for actively adapting the orientation and/or position of said component or for providing an offset in regard to the steering of said component.

According to at least one further embodiment, a computer program product comprises instructions which, when executed by a computer, cause the computer to carry out the method. According to at least one further embodiment, a computer-readable storage medium has stored thereon the computer program product. According to at least one further embodiment, a data processing device has stored thereon the computer program product. According to at least one further embodiment, an alignment system comprises the data processing device. According to at least one further embodiment, a wind turbine comprises the alignment system.

The embodiments and features described before and in the following equally apply to the method, the computer program product, the computer-readable storage medium, the data processing device, the alignment system and the wind turbine.

In particular, the method can be based on one or more method steps that include providing information of at least one component of the wind turbine. Preferably, information of at least two components of the wind turbine can be provided. Particularly preferably, information related to a relative arrangement of the at least two components can be provided. The information can be provided, for instance, when at least one of the components is controlled and intended to be in a reference position that can correspond, for example, to a 0°-reference position. Thus, the method can be suitable to receive insight whether the reference position is reached or whether there is a misalignment in regard to the reference position. Moreover, other positions than a reference position can be possible.

Furthermore, the information can be optical information, wherein the optical information can in particular be representative of a spatial arrangement of the at least one or the at least two components, in particular a spatial arrangement of at least two components relative to each other. A spatial arrangement, or arrangement in short, can include one or more parameters chosen from spatial positions, distances and rotational or pivotal states. Furthermore, the information, in particular the optical information, can comprise currently prevailing information, i.e. information indicative of a current state of the at least one or the at least two components, and reference information, i.e. information indicative of a reference state of the at least one or the at least two components. A comparison of currently prevailing information and corresponding reference information can enable the determination whether a misalignment of at least one component of the wind turbine exists. Furthermore, in case a misalignment is determined, a measure for compensating the alignment can be executed.

According to a further embodiment, first information is provided, wherein the first information is representative of at least one image taken with an image capturing device. For instance, the image capturing device can be a camera, for instance a camera sensitive to a visible and/or infrared light spectrum. Preferably, the first information is indicating an arrangement of a first component of the wind turbine relative to a second component of the wind turbine. Thus, the first information can be representative of a currently prevailing arrangement of a first component of the wind turbine relative to a second component of the wind turbine.

According to a further embodiment, second information is provided, wherein the second information is representative of at least one reference image. Particularly preferably, the reference image corresponds to the at least one image taken with the image capturing device. In other words, the at least one reference image can indicate the desired arrangement of the first component relative to the second component. Thus, in simple words, in the ideal case that the first component is arranged relative to the second component in the desired manner, i.e. in case the first component is perfectly aligned to the second component, the at least one image taken with the image capturing device can coincide with the at least one reference image at least in regard to the arrangement of the first and second component relative to each other.

According to a further embodiment, the first information is compared to the second information. Based on the comparison, it can be determined whether a misalignment of the first component relative to the second component exists. Thus, determining whether a misalignment exists can, in particular, include a comparison, either directly or indirectly, of the first information, i.e. one or more properties of the arrangement of the first component relative to the second component based on the at least one image taken with the image capturing device, to the second information, i.e. the corresponding one or more properties of the arrangement of the first component relative to the second component based on the reference image. In case a misalignment is determined, i.e. in case the first information deviates from the second information, a measure can be executed to compensate the misalignment of the first component relative to the second component as described above.

According to a further embodiment, the image capturing device is mounted on an object. The object can be an internal object, i.e. a component of the wind turbine. For instance, the image capturing device can be mounted on the first component or on the second component or on a third component of the wind turbine, wherein the third component is different from the first and second component. The third component can be or comprise, for instance, a support structure mounted on one of the nacelle and the tower of the wind turbine. Furthermore, the image capturing device can be mounted on an external object, i.e. an object that is not part of the wind turbine. The external object can be, for example, another wind turbine or a support post. Moreover, the external object can be or comprise an aerial vehicle like, in particular an unmanned aerial vehicle like a drone. In particular, the image capturing device can be mounted in a predetermined, well-defined and documented orientation and position on the object. In preferred embodiments, the at least one image taken by the image capturing device can capture at least a portion of the first component and at least a portion of the second component.

The first component can be or comprise, for instance, a wind measuring device of the wind turbine and/or a rotor blade of the wind turbine. The second component can be or comprise, for instance, a rotor blade of the wind turbine and/or the nacelle of the wind turbine. The wind measuring device can be preferably mounted on a top side of the nacelle of the wind turbine. Furthermore, the nacelle can comprise one or more markers in the field of view of the image capturing device, so that the markers can form at least a part of the second component. For example, the one or more markers can be situated on the top side of the nacelle.

In case both the first and second component are or comprise rotor blades, the first component can be a first rotor blade and the second component can be at least one second rotor blade different from the first rotor blade. In particular, the second component can be or comprise all rotor blades of the wind turbine except the first rotor blade. It can even be possible that the image capturing device is mounted to a first rotor blade forming the first component, whereas one or more or all other rotor blades form the second component.

According to a further embodiment, the measure to compensate the misalignment comprises adjusting the alignment of the first component in case the comparison reveals that the first component is misaligned relative to the second component. After adjusting the alignment of the first component, new first information can be provided. In particular, a further image can be taken with the mage capturing device. Consequently, the first information can be newly provided, wherein the newly provided first information is representative of the further image indicating the now adjusted arrangement of the first component of the wind turbine relative to the second component of the wind turbine. Then, it can be determined whether the second component is misaligned using the newly provided first information and the second information, wherein the second information is representative of at least one reference image which corresponds to the further image taken with the image capturing device. If the comparison reveals a misalignment of the second component, a measure can be executed that is configured to cause an adjustment of the alignment of the second component. The further image taken with the image capturing device and the further reference image may show the same or a different perspective as compared to the first image taken with the image capturing device and the first reference image. By repeatedly providing first and second information, a compensation of the alignment of one or more than one second component can be possible.

According to a further embodiment, executing a measure to compensate the misalignment of the first component relative to the second component comprises determining a compensation parameter for a controller of the wind turbine, and applying the compensation parameter, by the controller of the wind turbine, in a control algorithm for the wind turbine. The compensation parameter can be, for instance, an offset to be added to or subtracted from measurements of the wind measuring device or an offset to be applied to a pitch angle setpoint for a misaligned rotor blade.

According to a further embodiment, the first information depends on a third information, wherein the third information can be representative of at least one contour of the first component and/or of the second component captured in the at least one image taken with the image capturing device. The second information can be representative of at least one corresponding contour in the at least one reference image. In particular, determining whether at least one of the first component and the second component is misaligned by using the first information and the second information can be done by using an image recognition algorithm. The image recognition algorithm can comprise a contour recognition module configured to identify contours of objects in an image. This can be done, for instance, by using a Hough transformation.

According to a further embodiment, the image recognition algorithm is a part of a trained model and can be a part of the computer program product for carrying out the method. In particular, the computer program product can comprise instructions which, when executed by a computer, cause the computer to carry out the described method using a trained model comprising an image recognition algorithm. Preferably, the image recognition algorithm comprises a contour recognition module configured to identify contours of objects in an image.

The model can be trained on a training data set in a training process, wherein the training data set can be representative of a plurality of images, wherein each image is indicative of an arrangement of the first component of the wind turbine relative to the second component of the wind turbine and shows at least a portion of the first component and/or a portion of the second component, and of at least one reliably identified contour of the first component and/or the second component in each image. The training process can comprise providing the training data set, identifying at least one contour of the first component and/or the second component in each of the images by using the contour recognition module, comparing the contour identified by using the contour recognition module with the reliably identified contour, and training the model based on the comparison. In particular, several training images forming the training data set can be provided with different arrangements, i.e. misalignments, of the first component relative to the second component, and a reliably identified contour is determined in each of the training images and then associated with the corresponding training image.

According to a further embodiment, providing the first information comprises calibrating the first image to provide a calibrated first image. In particular, calibrating the first image can comprise providing a calibration image taken with the image capturing device. Thus, fourth information can be provided that is representative of the calibration image. Furthermore, a reference calibration image can be provided. Consequently, fifth information can be provided that is representative of the reference calibration image. Furthermore, at least one calibration parameter, which can include a plurality of calibration parameters, can be determined that is configured to transform the calibration image to the reference calibration image. Hence, sixth information can be determined that depends on the fourth information and the fifth information, wherein the sixth information is representative of the at least one calibration parameter. The at least one calibration parameter can then be applied to the first image for providing the first information. Consequently, the first information can be representative of at least one image taken with the image capturing device and corrected with the help of the at least one calibration parameter. In particular, the calibration can be done from time to time, for instance in regular intervals, in order to correct for aging or deterioration of the image capturing device. The calibration image can be provided by taking an image of a calibration pattern that can be positioned in the field of view of the image capturing device, for instance on the nacelle or a part of the rotor as a rotor hub.

According to a further embodiment, the alignment system for a wind turbine, also denoted alignment system in short, comprises the image capturing device for taking images of components of the wind turbine, and the data processing device comprising the computer program product as described before.

The method described herein is preferably based on high resolution images taken from one or more well-defined vantage points on the wind turbine itself or on an external object. Preferably, setting up the position of the image capturing device is highly reproducible, accurate and, documented. The one or more images taken from the one or more vantage points preferably focus on the specific components of the wind turbine to be aligned. Particularly preferably, preparation of reference images and uncertainty estimations are based on a prototype with known alignments or digital models. As described, the images are preferably analyzed with the help of automated image processing tools, for instance in order to find contours like edges of blade profiles or to north an alignment marker on top of a wind direction sensor.

Further features, advantages and expediencies will become apparent from the following description of exemplary embodiments in conjunction with the figures.
Figure 1 shows a schematic illustration of a wind turbine according to an embodiment,
Figures 2 and 3 show schematic illustrations of different partial views of the wind turbine according to further embodiments,
Figure 4 shows a schematic illustration of method steps of a method for compensating a misalignment of at least one component of a wind turbine according to a further embodiment,
Figure 5 shows a schematic illustration of method steps of a method for compensating a misalignment of at least one component of a wind turbine according to a further embodiment,
Figures 6 and 7 show schematic illustrations of method steps of a method for compensating a misalignment of at least one component of a wind turbine according to further embodiments,
Figures 8 and 9 show schematic illustrations of method steps of a method for compensating a misalignment of at least one component of a wind turbine according to further embodiments.

In the figures, elements of the same structure and/or functionality may be referred to by the same reference signs. It is to be understood that embodiments showing the figures are illustrative representations and are not necessarily drawn to scale.

In order to give a thorough understanding, preferred embodiments of a method for compensating a misalignment of at least one component, a wind turbine, an alignment system, a computer program product, a computer-readable storage medium and a data processing device are described in the following in connection with the figures. However, the described embodiments and combinations of features are not limiting. Alternatively or additionally to the features described in connection with the figures, the embodiments shown in the figures can comprise further features described in the general part of the description. Moreover, features and embodiments of the figures can be combined with each other, even if such combination is not explicitly described.

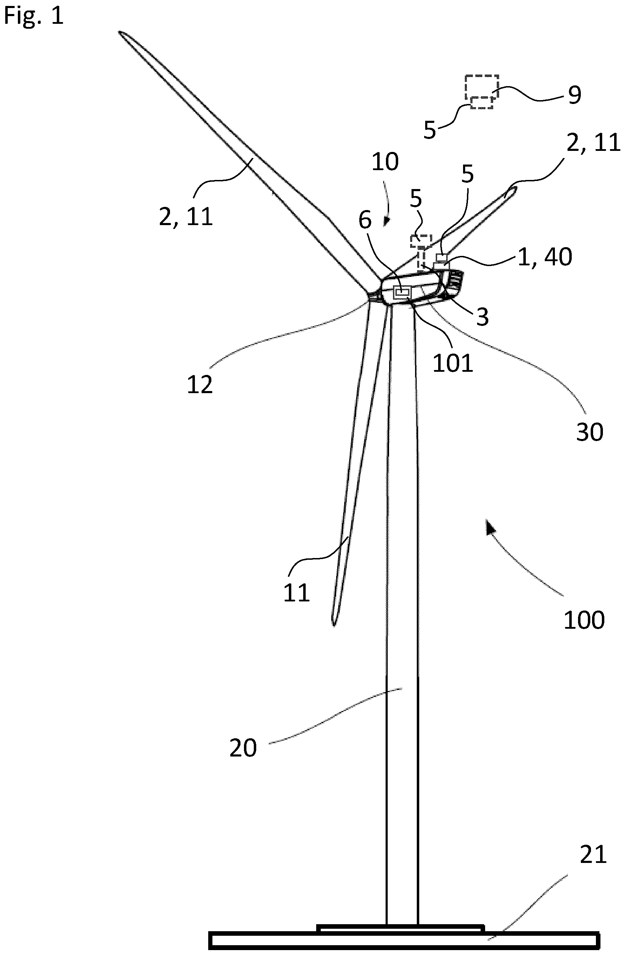

Figure 1 shows a wind turbine 100 which comprises a rotor 10 mounted to a tower 20. The tower 20 is fixed to the ground by means of a foundation 21. The rotor 10 comprises one or more rotor blades 11, which are arranged on a rotor hub 12 mounted to a nacelle 30. The nacelle 30 is rotatably mounted at an end of the tower 30 opposite to the ground. The nacelle 30 houses, for example, a generator (not shown) which is coupled to the rotor 10 via a rotor shaft and, if necessary, a gearbox (not shown).

During operation, the rotor 10 is set in rotation by an air flow, for example wind. This rotational movement is transmitted to the generator via a drive train comprising, inter alia, the rotor shaft and, if necessary, the gearbox. The generator converts the mechanical energy of the rotor 10 into electrical energy.

For optimizing the energy output of the wind turbine 100, the nacelle 30 is rotated into the wind. Moreover, the pitch angles of the rotor blades 11 are set according to the wind speed. This is done with the help of drives (not shown) which rotate the rotor blades 11 and the nacelle 30 to a respective target position. In order to control and operate the drives, the wind turbine 100 comprises a wind turbine controller (not shown) comprising a drive control system which determines operating setpoints with which the drives are operated. For example, the wind turbine controller can be located in the nacelle 30.

In order to gather information about the current wind conditions for properly setting the nacelle direction and the pitch angles, the wind turbine 100 comprises at least one wind measuring device 40 that can be arranged, for instance, on a top side of the nacelle 30. The wind measuring device 40 can be, for example, a wind direction sensor and/or a wind speed sensor.

The mentioned components, i.e. the rotor blades 11, the nacelle 30 and the wind measuring device 40, can perform rotational movements during operation. In order to properly set a required rotational angle, a reference position like a 0°-reference is defined for each of the components as described above in the general part. Due to various influences, the reference position can change over time, thereby causing a misalignment of the corresponding component that is compensated by the method described herein.

In order to perform the method for compensating a misalignment of at least one component of the wind turbine 100, the wind turbine 100 comprises an alignment system 101 with a data processing device 6. At least a part of the alignment system 101, for instance the data processing device 6, can be a part of the wind turbine controller. The alignment system 101 further comprises an image capturing device 5, which can be, for instance, a camera.

The method uses information indicating an arrangement of a first component 1 of the wind turbine 100 relative to a second component 2 of the wind turbine 100. The first component 1 can be or comprise, for instance, a wind measuring device 40 or a rotor blade 11 of the wind turbine 100. The second component 2 can be or comprise, for instance, a rotor blade 11 of the wind turbine 100 and/or the nacelle 30 of the wind turbine 100. In the shown embodiments, by way of example the first component 1 is the wind measuring device 40 and the second component 2 comprises two rotor blades 11 of the rotor 10. However, the first and second component 1, 2 can also be chosen differently according to the previous description.

The image capturing device 5 is mounted to an object that can be an internal object and, thus, a part of the wind turbine 100 itself. By way of example, the image capturing device 5 is mounted on the first component 1 that is the wind measuring device 40 in the shown embodiment. However, it is also possible that the image capturing device 5 is mounted on the second component 2 or on a third component 3 different from the first and second component 1, 2. The third component 3 can be an internal object of the wind turbine 100 like a support structure on the nacelle 30 or the tower 20 with the image capturing device 5 mounted thereon, as indicated in Figure 1 with dashed lines. Furthermore, the image capturing device 5 can be mounted on an external object 9, as also indicated in Figure 1 with dashed lines, wherein the external object 9 can be, for instance, an unmanned aerial vehicle like a drone or an external support post or other wind turbine positioned in the vicinity of the wind turbine 100.

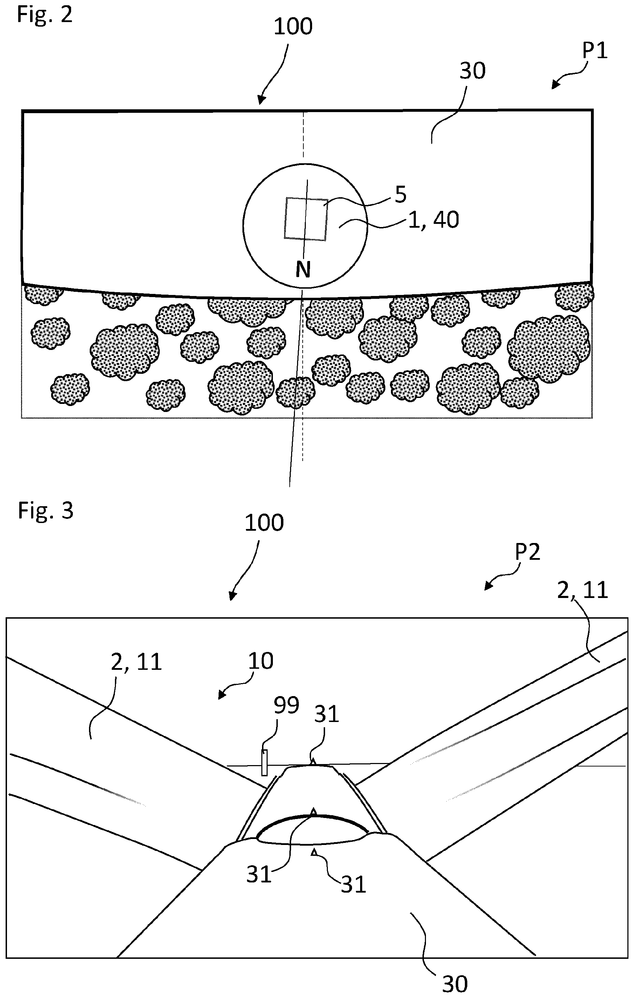

Figure 2 shows a partial view of the wind turbine 100 along the vertical direction onto the top side of the nacelle 30 with the first component 1, i.e. the wind measuring device 40 in the shown embodiments, and the image capturing device 5 mounted on the first component 1. Also indicated by the solid line is a horizontal axis of the wind measuring device 40 which deviates from a horizontal axis of the nacelle 30 indicated by the dashed line. Thus, the first component 1 has a misalignment with respect to the nacelle 30 and, thus, also with respect to the rotor 10 with the rotor blades 11. It is to be noted that the view shown in Figure 2 (without the indicated image capturing device 5 on the wind measuring device 40) could be an example of an image, here denoted as image P1, or a part of that image taken by the image capturing device 5 for instance in case that the image capturing device 5 is mounted on a third component or an external object as explained in connection Figure 1.

Figure 3 shows a partial view of the wind turbine 100 in a horizontal direction along the top side of the nacelle 30 towards the rotor 10 with the rotor blades 11 as seen from the image capturing device 5 mounted on the wind measuring device 40. It is to be noted that the view shown in Figure 3 could be an example of an image, here denoted as image P2, or a part of that image taken by the image capturing device 5 on the first component 1 formed by the wind measuring device 40. Also indicated are markers 31 on the top side of the nacelle 30 that could also form second components 2. Furthermore, by way of example close to the horizon an external object 99 is indicated that could serve as external reference for determining the direction towards north.

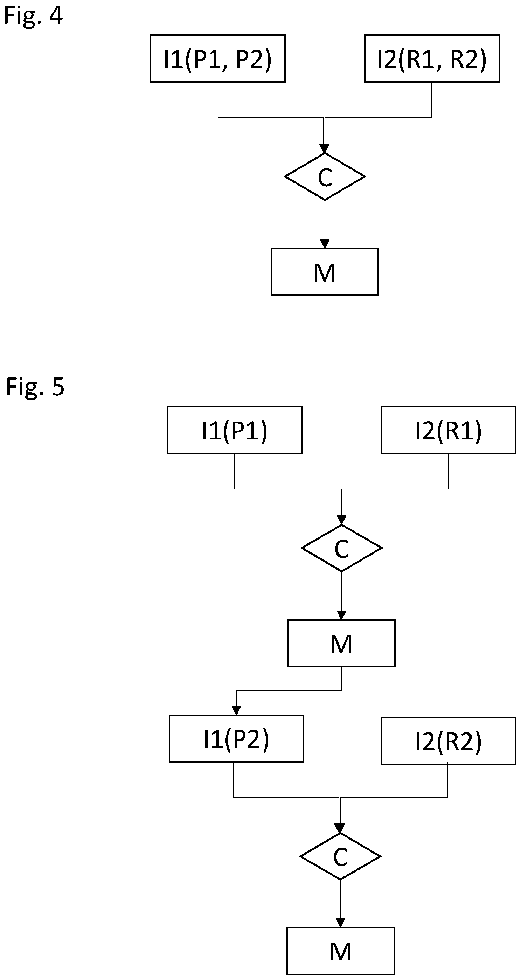

Figure 4 shows an embodiment of the method for compensating a misalignment of at least one component of the wind turbine. The first and second components mentioned in connection with the method can be embodied as described before. In particular, the method can be a computer-implemented method or can be a part of the computer-implemented method. Consequently, the computer-implemented method can comprise or be the method as described in connection with Figure 4 as well as in connection with the following figures. Moreover, the computer-implemented method can be implemented in a computer program product, so that the computer program product comprises instructions which, when the computer program product is executed by a computer, cause the computer to carry out the method for compensating a misalignment of at least one component of the wind turbine 100. The computer program product can be stored on a computer-readable storage medium and can be part of the data processing device 6 of the alignment system 101 as explained in connection with Figure 1. Thus, features and embodiments referring to the method also apply to the computer-implemented method, to the computer program product, to the computer-readable storage medium and to the data processing device 6. Thus, Figure 4 as well as the following figures are also representations of the computer-implemented method, the computer program product, the computer-readable storage medium and the data processing device 6.

As indicated in Figure 4, first information I1 is provided, wherein the first information I1 is representative of at least one image P1, P2 that is taken with the image capturing device as explained above. In particular, the first information I1 is indicating a currently prevailing status in regard to the arrangement of the first component of the wind turbine relative to the second component of the wind turbine at the time the image P1, P2 is taken.

Furthermore, second information I2 is provided, wherein the second information I2 is representative of at least one reference image R1, R2. In particular, the reference image R1, R2 corresponds to the at least one image P1, P2 taken with the image capturing device. in particular, the at least one reference image R1, R2 has the same perspective and field of view as the at least one image P1, P2. Thus, the at least one reference image R1, R2 preferably indicates the desired arrangement of the first component relative to the second component.

In a comparing step C the first information I1 is compared to the second information 12. Accordingly, a deviation of the prevailing arrangement at the time the at least one image P1, P2 was taken to the desired arrangement of the first component relative to the second component is determined, which can indicate a misalignment. Thus, based on the comparison, it can be determined whether a misalignment of the first component relative to the second component exists. In case a misalignment is determined, i.e. in case the first information I1 deviates from the second information I2 at least in regard to the arrangement of the first component relative to the second component, a measure M can be executed to compensate the misalignment of the first component relative to the second component as described above.

For example, executing the measure M to compensate the misalignment of the first component relative to the second component can comprise determining a compensation parameter for a controller of the wind turbine, and applying the compensation parameter, by the controller of the wind turbine, in a control algorithm for the wind turbine. In case the first component is a wind measuring device as described above, the compensation parameter can be, for instance, an offset to be added to or subtracted from measurements of the wind measuring device. In case the first component is a rotor blade, the compensation parameter can be, for instance, an offset to be applied to a pitch angle setpoint for the misaligned rotor blade. Furthermore, the measure M can comprise adjusting, e.g. mechanically adjusting, the alignment of the first component in case the comparison reveals that the first component is misaligned relative to the second component.

In connection with the following figures, modifications of the embodiment of Figure 4 are explained. Thus, the description of the following figures mainly refers to difference in comparison to foregoing embodiments.

As shown in Figure 5, the method steps can be performed in iterations. After providing and comparing the first information I1 based on at least one first image P1 and the second information I2 based on at least one first reference image R1 and after providing a measure M for adjusting the alignment of the first component, new first information I1 can be provided. In particular, at least one further image P2 can be taken with the image capturing device. Consequently, the first information I1 can be newly provided, wherein the newly provided first information I1 is representative of the at least one further image P2 indicating the previously adjusted arrangement of the first component of the wind turbine relative to the second component of the wind turbine. Correspondingly, second information I2 can be provided, wherein the second information I2 is representative of at least one reference image R2 which corresponds to the at least one further image P2 taken with the image capturing device. Then, in a further comparing step C it can be determined whether the second component is misaligned using the newly provided first and second information I1, I2. If the comparison reveals a misalignment of the second component, a further measure M can be executed that is configured to cause an adjustment of the alignment of the second component. The at least one further image P2 taken with the image capturing device and the at least one further reference image R2 may show the same or a different perspective and/or field of view as compared to the at least one first image P1 taken with the image capturing device and the at least one first reference image R1. By repeatedly providing first and second information I1, I2, a compensation of the alignment of several components can be possible.

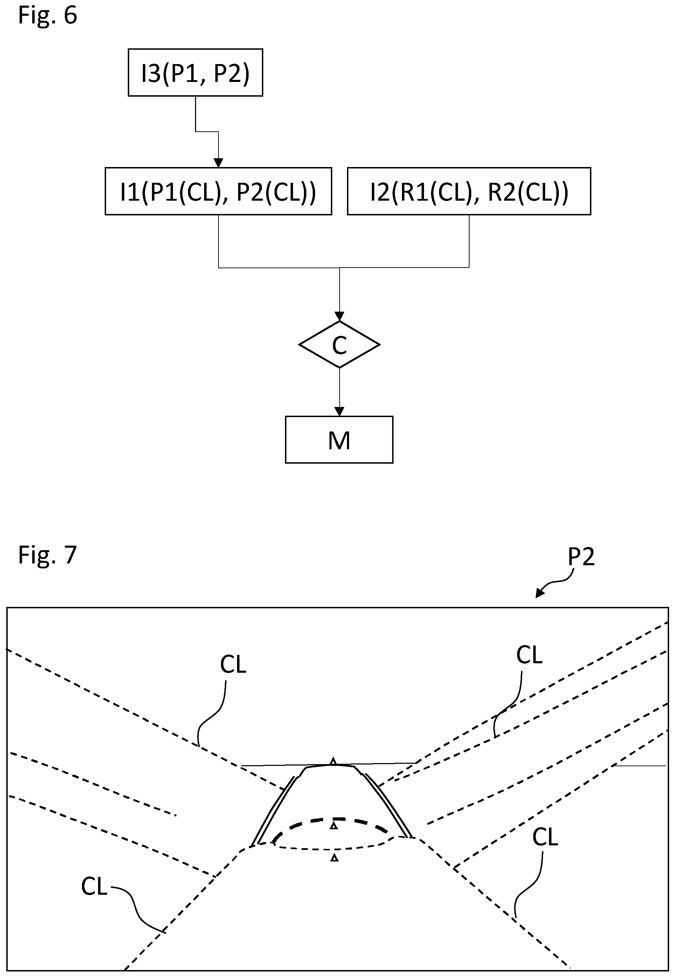

Figure 6 shows a further modification of the method, according to which the first information I1 depends on a third information I3, wherein the third information I3 can be representative of at least one contour CL of the first component and/or of the second component captured in the at least one image P1, P2 taken with the image capturing device, indicated in Figure 6 as "P1(CL)" and "P2(CL)". By way of example only, Figure 7 shows several contours CL in the image P2 of Figure 3. The second information I2 can be representative of at least one corresponding contour CL in the at least one reference image R1, R2, indicated in Figure 6 as "R1(CL)" and "R2(CL)".

In particular, determining whether at least one of the first component and the second component is misaligned based on contours CL can be done by using an image recognition algorithm. The image recognition algorithm can comprise a contour recognition module configured to identify contours of objects in an image. This can be done, for instance, by using a Hough transformation. In particular, the image recognition algorithm is a part of a trained model and can be a part the computer program product for carrying out the method. Accordingly, the computer program product comprises instructions which, when executed by a computer, cause the computer to carry out the described method using a trained model comprising an image recognition algorithm, wherein the image recognition algorithm comprises a contour recognition module configured to identify contours of objects in an image.

The model is trained on a training data set in a training process, wherein the training data set can be representative of a plurality of images, wherein each image is indicative of an arrangement of the first component of the wind turbine relative to the second component of the wind turbine and shows at least a portion of the first component and/or a portion of the second component, and of at least one reliably identified contour CL of the first component and/or the second component in each image as indicated in Figure 7. The training process can comprise providing the training data set, identifying at least one contour of the first component and/or the second component in each of the images by using the contour recognition module, comparing the contour identified by using the contour recognition module with the reliably identified contour, and training the model based on the comparison. Several training images forming the training data set can be provided with different arrangements, i.e. misalignments, of the first component relative to the second component, and a reliably identified contour CL is determined in each of the training images and then associated with the corresponding training image.

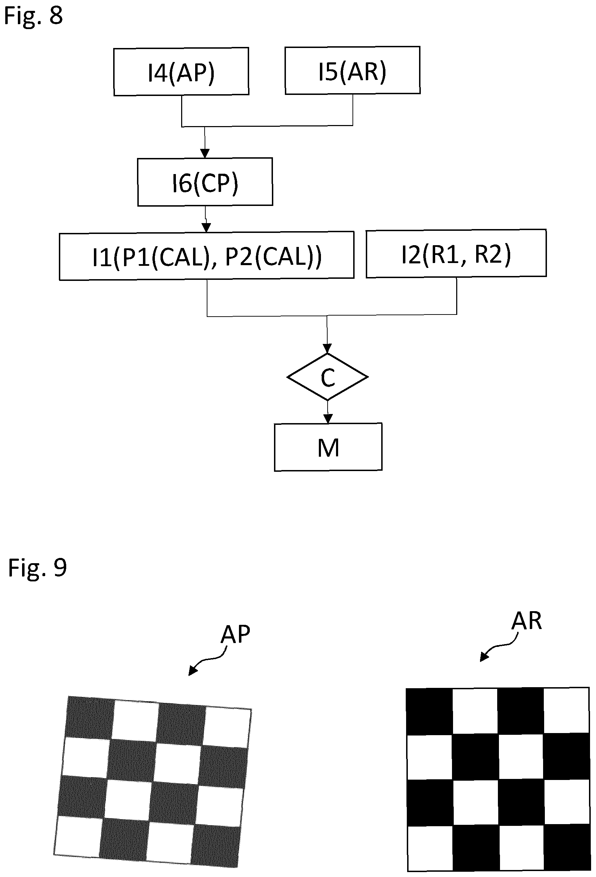

Figure 8 shows a further modification of the method, according to which providing the first information I1 comprises calibrating the at least one first image P1, P2 to provide at least one calibrated first image P1(CAL), P2(CAL). In particular, calibrating the at least one first image P1, P2 can comprise providing a calibration image AP taken with the image capturing device. Thus, fourth information I4 can be provided that is representative of the calibration image AP. Furthermore, a reference calibration image AR can be provided. Consequently, fifth information I5 can be provided that is representative of the reference calibration image AR. Figure 9 shows examples of a calibration image AP as taken by the image capturing device and a corresponding reference calibration image AR.

Based on the deviation of the calibration image AP from the reference calibration image AR at least one calibration parameter CP, i.e. one or a plurality of calibration parameters CP, is determined, wherein the at least one calibration parameter CP is configured to transform the calibration image AP into the reference calibration image AR. Hence, sixth information I6 can be determined that depends on the fourth information I4 and the fifth information I5, wherein the sixth information I6 is representative of the at least one calibration parameter CP.

The at least one calibration parameter CP is applied to the at least one image P1, P2 to obtain the at least one calibrated image P1(CAL), P2(CAL) for providing the first information I1. Consequently, the first information I1 can be representative of at least one image P1, P2 taken with the image capturing device and corrected with the help of the at least one calibration parameter CP.

In particular, the calibration can be done from time to time, for instance in regular intervals, in order to correct for aging or deterioration of the image capturing device. The calibration image AP can be provided by taking an image of a calibration pattern that can be positioned in the field of view of the image capturing device, for instance on the nacelle or a part of the rotor as a rotor hub.

The invention is not restricted by the description on the basis of the exemplary embodiments. Rather, the invention encompasses any new feature and also any combination of features, which in particular comprises any combination of features in the patent claims, even if this feature or this combination itself is not explicitly specified in the patent claims or exemplary embodiments.

### Reference signs

1 first component
2 second component
3 third component
5 image capturing device
6 data processing device
10 rotor
11 rotor blade
12 rotor hub
20 tower
21 foundation
30 nacelle
31 marker
40 wind measuring device
99 external object
100 wind turbine
101 alignment system
I1, I2, I3, I4, I6 information
P1, P2 image
R1, R2 reference image
AP calibration image
AR reference calibration image
CL contour
CAL calibration
CP calibration parameter
C comparing step

## Claims

1. A method for compensating a misalignment of at least one component (1, 2) of a wind turbine (100), the method comprising
- providing first information (I1) which is representative of at least one image (P1, P2) taken with an image capturing device (5) and indicating an arrangement of a first component (1) of the wind turbine (100) relative to a second component (2) of the wind turbine (100),
- providing second information (I2) which is representative of at least one reference image (R1, R2) which corresponds to the at least one image (P1, P2),
- comparing the first information (I1) to the second information (I2) and, based on the comparison, determining whether a misalignment of the first component (1) relative to the second component (2, 3) exists, and,
- in case a misalignment is determined, executing a measure (M) to compensate the misalignment of the first component (1) relative to the second component (2).

2. The method according to claim 1, wherein
- the image capturing device (5) is mounted on the first component (1), the second component (2), a third component (3) of the wind turbine, or an object (9) which is not part of the wind turbine (100).

3. The method of claim 2, wherein the third component (3) is a support structure mounted on one of a nacelle (30) and a tower (20) of the wind turbine (100).

4. The method according to any one of the preceding claims, wherein
- the at least one image (P1, P2) captures at least a portion of the first component (1) and at least a portion of the second component (2).

5. The method according to any one of the preceding claims, wherein the first component (1) is one of
- a wind measuring device (40), and
- a rotor blade (11) of the wind turbine (100).

6. The method of any one of the preceding claims, wherein the second component (2) is at least one of
- a rotor blade (11) of the wind turbine (100), and
- a nacelle (30) of the wind turbine (100).

7. The method of any one of the preceding claims, wherein executing a measure (M) to compensate the misalignment of the first component (1) relative to the second component (2, 3) comprises:
- determining a compensation parameter for a controller of the wind turbine (100), and
- applying the compensation parameter, by the controller of the wind turbine, in a control algorithm for the wind turbine (100).

8. The method according to any one of the preceding claims, wherein the method comprises:
- determining the first information (I1) depending on a third information (I3), wherein the third information (I3) is representative of at least one contour (CL) of the first component (1) and/or of the second component (2) captured in the at least one image (P1, P2), wherein
- the second information (I2) is representative of at least one corresponding contour (CL) in the at least one reference image (R1, R2).

9. The method according to any one of the preceding claims, wherein providing the first information (I1) comprises calibrating the at least one image (P1, P2) to provide at least one calibrated image (P1(CAL), P2(CAL)).

10. The method according to claim 9, wherein
calibrating the at least one first image (P1, P2) comprises:
- providing a calibration image (AP) taken with the image capturing device (5),
- providing a reference calibration image (AR),
- determining at least one calibration parameter (CP), which is configured to transform the calibration image (AP) to the reference calibration image (AR), and
- applying the at least one calibration parameter (CP) to the first image (P1).

11. A computer program product comprising instructions which, when executed by a computer, cause the computer to carry out the method of any one of claims 1 to 10 using a trained model comprising an image recognition algorithm.

12. The computer program product according to claim 11, wherein:
- the image recognition algorithm comprises a contour recognition module configured to identify contours (CL) of objects in an image.

13. The computer program product according to claim 11 or 12, wherein the model is trained on a training data set in a training process, wherein the training data set is representative of
- a plurality of images, wherein each image is indicative of an arrangement of the first component (1) of the wind turbine (100) relative to the second component (2) of the wind turbine (100) and shows at least a portion of the first component (1) and/or a portion of the second component (2), and
- at least one reliably identified contour of the first component (1) and/or the second component (2) in each image.

14. The computer program product according to claim 13, wherein the training process comprises
- providing the training data set,
- identifying at least one contour (CL) of the first component (1) and/or the second component (2) in each of the images by using the contour recognition module,
- comparing the contour (CL) identified by using the contour recognition module with the reliably identified contour,
- training the model based on the comparison.

15. A computer-readable storage medium having stored thereon the computer program product according to any one of claims 11 or 14.

16. A data processing device (6) having stored thereon the computer program product according to any one of claims 11 to 14.

17. An alignment system (101) for a wind turbine (100), comprising:
- a image capturing device (5) for taking images of components (1, 2, 3) of the wind turbine (100),
- the data processing device (6) according to claim 16.
